# EUROPEAN PATENT SPECIFICATION

(11) **EP 2 123 111 B1**
(45) Date of publication and mention of the grant of the patent: **21.08.2013**
(21) Application number: 07787449.3
(22) Date of filing: 12.07.2007
(51) Int. Cl.: H04R 23/00, F03G 7/06

(54) **LOUDSPEAKER ACTUATOR**
LAUTSPRECHER-STELLGLIED
ACTIONNEUR DE HAUT-PARLEUR

(30) Priority: 22.01.2007 US 625404
(43) Date of publication of application: 25.11.2009
(73) Proprietor: Sony Mobile Communications AB, 221 88 Lund (SE)
(72) Inventor: KLINGHULT, Gunnar, S-223 59 Lund (SE)
(74) Representative: Bengtsson, Peggy Katrin
(86) International application number: PCT/EP2007/057178
(87) International publication number: WO 2008/089853

(56) References cited:
- WO-A-2005/075823
- GB-A- 2 362 719
- US-B1- 6 563 934
- Y. H. TEH & R. FEATHERSTONE: "Experiments on the Audio Frequency Response of Shape Memory Alloy Actuators" AUSTRALASIAN CONF. ROBOTICS AND AUTOMATION (ACRA 2005), [Online] 2005, pages 1-6, XP002451540 Sydney, Australia Retrieved from the Internet: URL:http://users.rsise.anu.edu.au/~roy/SMA /acra05paper.pdf> [retrieved on 2007-09-19]

## Description

### Technical field of the invention

The present invention relates generally to loudspeakers for a portable electronic devices and, more particularly, to actuation of such a loudspeaker and means for achieving this.

### State of the art

Loudspeakers are used in portable electronic devices, such as cellular phones, lap tops and music players, e.g. MP3-players, for emission of sound. The most common means for driving or actuating a loudspeaker are a coil and a magnet that are powered for movement in relation to each other and in correspondence with signals that are analogous to the sound to be emitted, which movement is transmitted to a diaphragm/membrane, often with a conical shape, that moves air in a back and forth movement in response to the signals. Another type of loudspeakers is loudspeakers with flat plane-shaped diaphragms, so-called flat panel speakers, which are driven for example by coils and magnets, by a piezoelectric exciter, an electrical plasma arc, or digitally (digital loudspeakers).

These prior art loudspeakers exhibit disadvantages, e.g. coils and magnets are bulky and heavy, requiring a lot of power when actuated, and space when put into the associated device, and also add to the weight of the device. Moreover, a piezoelectric actuator is fragile and do not withstand shocks, it is also too weak, i.e. provides too low power for actuating a loud speaker at low frequencies. The plasma arc loudspeaker that uses electrical plasma as a driver is light since plasma has minimal mass but has problems of maintenance and reliability and is very unsuitable for the mass market due to the fact that the plasma is generated from a tank of helium which must be periodically refilled, for instance. Furthermore, digital loudspeakers require large diaphragms, which mean that they require a lot of space. These disadvantages make prior art loudspeakers difficult to handle, heavy, bulky and often costly.

Prior art documents XP002451540 ("Experiments on the Audio Frequency Response of Shape Memory Alloy Actuators"), W02005/075823, US 6563934B1 and GB 2362719A discloses actuation of loudspeaker systems according to prior art.

### Summary of the invention

In the present invention, the drawbacks of prior art loudspeakers are solved by providing a loudspeaker for a portable electronic device with a mechanical coupling to a so called muscle wire that is made of shape changing metal, i.e. memory metal, and means for activating this muscle wire.

According to one aspect of the present invention a loudspeaker system according to claim 1 is provided.

According to a preferred aspect a loudspeaker system is provided comprising two memory metal parts, alternately controllable in substantially opposite directions, which parts are arranged to actuate the alternating motion of the loudspeaker element.

In accordance with another preferred aspect a loudspeaker system is provided comprising a first and a second memory metal part, where the first memory metal part is arranged to actuate a motion of the loudspeaker element in a first direction and the second memory metal part is arranged to actuate a motion of the loudspeaker element in a second direction substantially opposite the first direction alternately. The loudspeaker system may also comprise one memory metal part, where the memory metal part is arranged to actuate a motion of the loudspeaker element in a first direction, and a spring that is arranged to actuate a motion of the loudspeaker element in a second direction substantially opposite the first direction.

According to yet another preferred aspect the mechanical coupling between the loudspeaker element and each memory metal part is a linkage. The linkage may comprise a first member and a second member, the members being elongated and pivotally connected to each other end to end, and each memory metal part being attached at a first end to the connected ends of the linkage members and at a second end to the portable electronic device.

The invention also relates to a method for actuating a flat loudspeaker element according to claim 9.

According to a preferred aspect a method for actuating a flat loudspeaker element comprises empowering two memory metal parts alternately, in substantially opposite directions, such that an alternating motion of the loudspeaker element is actuated. The method may comprise providing the power to each memory metal part by dividing the signal into two parts, and contracting each memory metal part in response to these signal parts. This may be performed by contracting one memory metal part in response to one part of the signal, and contracting another memory metal part in response to another part of the signal.

According to another aspect a device comprises a loudspeaker system according to any of claims 1-9.

The muscle wire withstands mechanical shocks better and also provides a better output response on lower frequencies due to bigger strokes, thereby moving more air. This is due to the fact that a muscle wire is strong, i.e. the muscle wire exert a great force when contracting after being empowered, which means that it has a great efficiency when transforming power into force for actuating a loud speaker element, whereby use of a muscle wire for generating sound reduces the weight of a portable electronic device and also the number of components required for doing this, and therefore reduces the cost of the device. Furthermore, the invention also provides a very low height and a flat shape of the actuator when implemented in a mobile device, whereby the use of the restricted space in such a device is optimized.

It should be emphasised that the term "comprises/comprising" when used in this specification is taken to specify the presence of stated features, integers, steps or components but does not preclude the presence or addition of one or more other features, elements, integers, steps, components or groups thereof.

### Brief description of the drawings

The invention will be described in detail below with reference to the accompanying drawings, in which:
Fig. 1-3 show a portable electronic device equipped with a loudspeaker system according to the invention,
fig. 2 shows a flat loudspeaker panel coupled to muscle wiring, according to one embodiment of the invention,
fig. 3 shows the flat loudspeaker panel coupled to two muscle wires according to another embodiment of the invention,
fig. 4 shows the flat loudspeaker panel coupled to two muscle wires according to still another embodiment of the invention,
fig. 5 shows the flat loudspeaker panel coupled to two muscle wires according to yet another embodiment of the invention, and
fig. 6 is a flowchart describing a method for actuating a flat loudspeaker panel by means of muscle wire.

### Detailed description of preferred embodiments

A typical loudspeaker consists of a diaphragm that is moved by actuator means, which means are controlled/powered by a control unit or processor in response to sound waves that have been converted into analogue/digital signals. This is known technology and will not be explained in further detail.

Moreover, in this description, the term muscle wire is used to denote an elongate object of shape changing memory metal, e.g. nickel-titanium (Ni-Ti) alloy, see e.g. the trademarks Nitinol and Flexinol. The muscle wire in accordance with the invention may of course have other shapes, e.g. a band- or ribbon-like shape so that the wire may roll (coil) itself up or unroll when changing its shape, a rod or bar shape, or a string/cord/cable shape, and different cross-sections, e.g. circular, triangular, square, star or any other suitable cross-section. The function and performance of these types of memory metal parts or wires are explained further later on in this description.

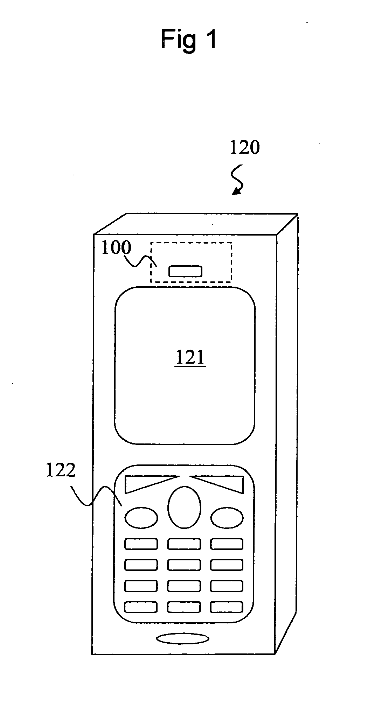

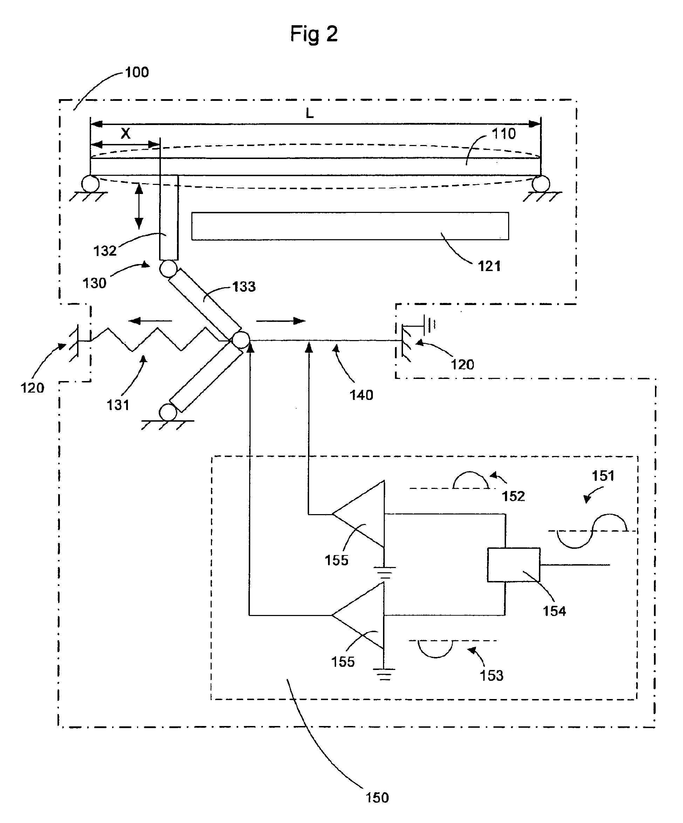

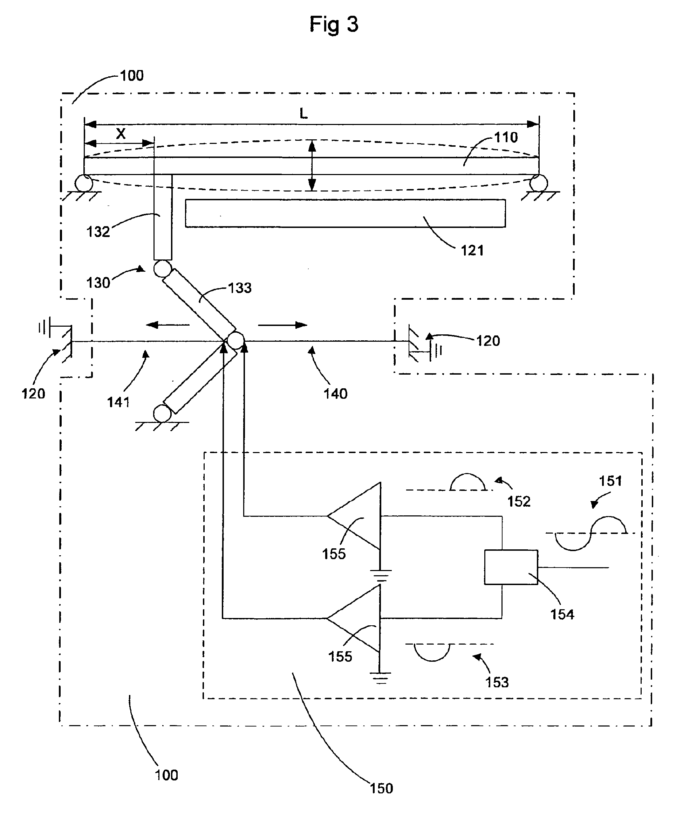

Fig 1 shows a first embodiment of a loudspeaker system 100 with one flat loudspeaker element in the form of a panel 110 provided in a portable electronic device 120 (shown in fig 3 with a display 121 and a key pad 122). The flat loudspeaker element 100 is mounted in the portable electronic device 120 behind and/or above the LCD display 121, as shown in figs. 1 and 2.

In the embodiment of fig 2, the loudspeaker panel 110 has a mechanical coupling 130 to at least one memory metal part, i.e. a memory metal or muscle wire 140 connected to one control power source unit 150 configured to control and supply power to the wire 140 in response to received signals 151 corresponding to sound to be generated. The mechanical coupling 130 is also connected to a spring 131 that counteracts the memory metal part 140. When power is supplied to the wire 140, the wire is configured to exert a force on the flat loudspeaker panel 110 to actuate an alternating motion of the loudspeaker panel, i.e. the wire 140 contracts in one direction when heated by supplied power while the spring 131 pulls in the substantially opposite direction so that when the power supply to the wire is interrupted, the wire 140 cools and the spring 131 extend the wire by pulling in the opposite direction of the wire contraction. Here, the spring 131 may be eliminated as the loud speaker panel 110, in itself, acts as a spring when the muscle wire 140 first pulls the loud speaker panel in one direction and then retracts when cooled and the loud speaker panel reverts to its original shape. This solution may be used as a buzzer, hummer and/or a howler or any other similar sounds.

In a second embodiment, as shown in fig 3, two muscle wires 140 and 141 are mechanically coupled to the loudspeaker panel 110, which wires are connected to a control power source unit 150 configured to control and supply power to each wire 140, 141 by means of signals 151 that is divided into positive and negative half-periods 152, 153 by means of a divider 154, whereby each signal 152 and 153 is amplified by an amplifier 155 before reaching the associated muscle wire 140, 141. These means for controlling the empowering of the muscle wires 140, 141 is used in each embodiment of the invention shown in figs. 2-5. In this embodiment of fig 3, the spring 131 is replaced with a second memory metal wire 141. When power is supplied to each wire 140, 141, each wire is configured to exert a force on the flat loudspeaker panel 110 to actuate an alternating motion of the loudspeaker panel. The two memory metal wires 140, 141, alternately controllable in substantially opposite directions, to actuate an alternating motion of the loudspeaker panel 110. In this embodiment of the loudspeaker system 100 with a first and a second memory metal wire 140, 141, the first wire 140 to the right is arranged to actuate a motion of the loudspeaker panel 110 in a first direction and the second wire 141 to the left is arranged to actuate a motion of the loudspeaker panel in a second direction substantially opposite the first direction alternately. This is done by the first wire 140 contracting in one direction (to the right in fig 2) when heated by supplied power while the second wire 141 is arranged to contract in the substantially opposite direction (to the left in fig 2) so that when the power supply to the first wire 140 is interrupted, the first wire 140 cools and the second wire 141 is supplied with power so that it is heated and contracts, thereby extending the first wire 140 by pulling in the opposite direction of contraction for this first wire 140. This control of the alternating wire contractions achieves an alternating motion for the flat loudspeaker panel 110, thereby generating sound.

In the embodiments shown in figs. 2 and 3, the mechanical coupling 130 between the loudspeaker panel 110 and each muscle wire 140, 141 is a linkage. The linkage comprises a first member 132 and a second member 133, the members being elongated and movable, in this embodiment pivotally connected to each other end to end, and each memory metal wire 140, 141 being attached at one end to the connected ends of the linkage members 132, 133 and at the other end to the portable electronic device 120.

In another embodiment, each muscle wire 140, 141 could have a linkage instead of a common linkage for both. In that case, the linkage 130 may have members 132, 133 with different lengths and the members could also be positioned and arranged differently, e.g. closer to the middle of the loud speaker panel 110. Furthermore, the distance X from the end of the loud speaker panel 110 in Figs. 2-5 to the connection of the linkage 130 may be between 0 and L (the total length L of the loud speaker panel 110), e.g. ¾ L, % L, L/2, L/3, L/4 or any other suitable value so that when the loud speaker panel 110 is moved, suitable shapes of the panel is achieved creating desired sound waves (only one symmetrical shape is shown with dashed lines in figs. 2-5 but any other shape is possible, e.g. non-symmetrical shapes).

In figs 2-5, each muscle wire 140, 141 is electrically grounded at its end connection to the portable device at position 120 and electrically isolated at its end connected to the common connection point of the ends of the linkage members 132, 133. Each muscle wire may also be electrically isolated at each end but, in that case, a suitable return path for the current to the amplifiers 155 must be provided. Each amplifier 155 is also electrically grounded at their lower part/corner as shown in figs. 2-5.

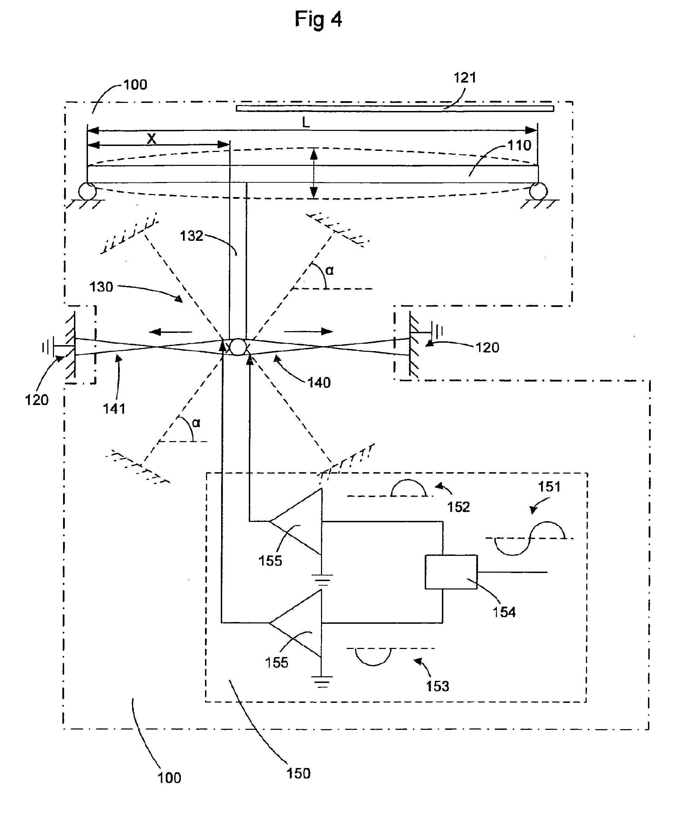

In fig 4, another embodiment is shown with two crossed muscle wires 140, 141, which cross each other but do not contact each other physically as they are arranged in different planes having a distance between them, i.e. sideways. The conveying of a motion is preferably achieved by arranging each wire as a taut string between two supports and letting a connection point or joint, i.e. the common end connection between the two linkage members 132, 133 contacting the wire, in this embodiment, approximately at the middle of its length, even though other positions are possible, e.g. a third or fourth of its length conveying the force from the memory metal wire, i.e. the increased tension in the muscle wire to the connection point, as would a bowstring to an arrow, and further to the loud speaker panel 110. Here, the wires extend essentially in parallel with the plane of the loud speaker panel 110 but may of course, in other embodiments, e.g. as shown with dashed lines in fig. 4, act on or affect the connection joint to the loud speaker panel 110 from different angles, i.e. the wires may extend with an angle between the plane of the loud speaker panel 110 and the wires. This angle α in fig 4 could be between 5°- 90° in one embodiment (not shown), between 10°-80°, preferably between 20°- 60°, more preferably between 40°- 50°, or most preferably about 45° as shown in fig 4.

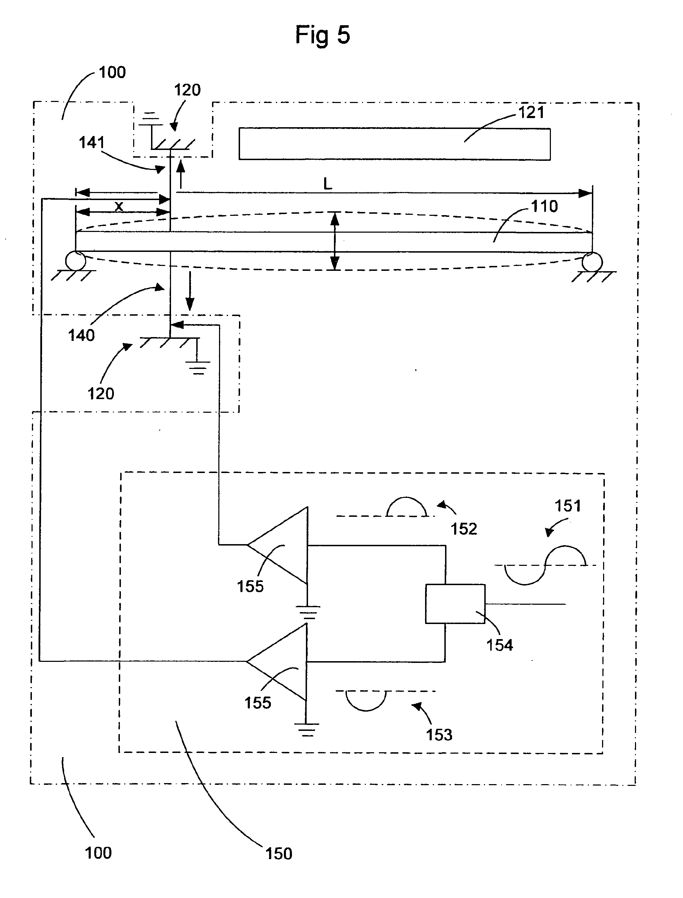

In another embodiment shown in fig 5, each memory metal wire 140, 141 is coupled directly to the loudspeaker panel 110. The strokes of the loud speaker panel 110 in this embodiment depends largely on the length of each muscle wire 140, 141, whereby longer wires give bigger strokes. Different lengths of each muscle wire may be achieved by using pulleys connected to the portable device 120 around which each wire is winded. These pulleys may be arranged in different ways and/or on different positions, whereby longer and/or shorter lengths of wire may be achieved, e.g. wires 140 having different lengths or wires with adjustable lengths.

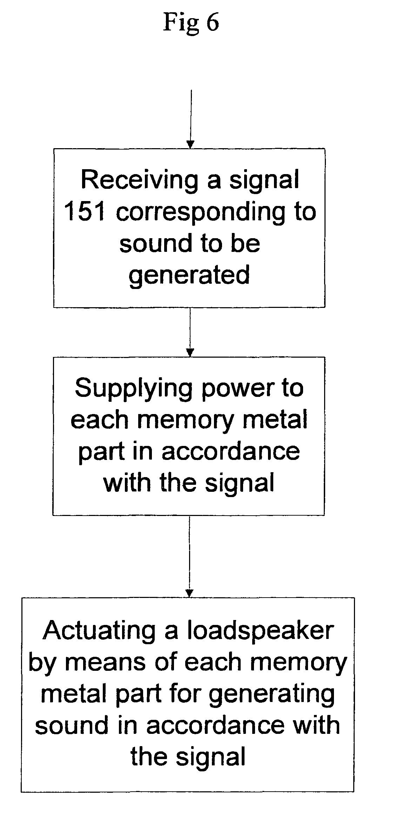

In the embodiments of figs 2-6, a method for actuating the flat loudspeaker panel 110 is performed by receiving a signal 151 corresponding to sound to be generated by the loudspeaker element, and supplying power to each memory metal wire 140, 141 upon receipt of the signal, and actuating the loudspeaker panel in response to the power being provided to the wires. The actuation and movements of the loud speaker panel for generating sound are controlled by feeding the muscle wires with appropriately varying voltages, causing the wires 140, 141 to heat up and contract in a way corresponding to the heating effect of the electrical current passing through the wire. Electrical current fed to the wire for causing a sound frequency may be an electrical current having alternating on and off periods corresponding to the desired frequency. A single twitch of the loud speaker panel is generated by a single pulse.

In the second embodiment in fig 3, the two wires 140, 141 are heated alternately, contracting alternately in substantially opposite directions. This alternating heating of the wires 140, 141 is performed by supplying power to the wires by dividing the signal 151 into two parts 152, 153, whereby the wires contract alternately in response to these signal parts 152, 153. In one embodiment, one wire 140 contracts in response to one part 152 of the signal 151, and the other wire 141 contracts in response to the other part 153 of the signal, and in another embodiment one muscle wire 140 contracts in response to a positive part 152 of the signal 151, and the other wire 141 contracts in response to a negative, and inverted part 153 of the signal.

Fig 1 is a schematic view of the exemplary portable electronic device or mobile terminal 120 with the loud speaker system 100 according to the invention. As used herein, the terms "portable electronic device" or "mobile terminal" may include a cellular radiotelephone 120 as in fig 3 but may also be, e.g. a Personal Communications System (PCS) terminal that may combine a cellular radiotelephone with data processing, facsimile and data communications capabilities; a personal digital assistant (PDA) that can include a radiotelephone, pager, Internet/Intranet access, Web browser, organizer, calendar and/or a Global Positioning System (GPS) receiver; and a conventional laptop and/or palmtop receiver or other appliance that includes a radiotelephone transceiver. Mobile terminals may also be referred to as "pervasive computing" devices and may also include cameras. It should also be understood that the invention may also be implemented in other devices or systems that include loud speakers or in a standalone loudspeaker that is connected to a device with no radio communication functionality, e.g. a home cinema loud speaker.

A muscle wire 140, 141 is fabricated from a material that changes shape or size when the material is heated beyond a particular temperature. The particular temperature needed to change the shape/size depends on the particular material. In one implementation, muscle wire 140, 141 may be made of an alloy that is designed to contract (i.e. a fixed length becomes shorter) when the wire 140, 141 is heated beyond a threshold temperature. In addition, the alloy may be fabricated to have poor conductivity (e.g. have resistive characteristics). In this manner, when power is applied to wire 140, 141, the wire becomes heated beyond the threshold temperature, thereby causing wire 140, 141 to contract.

Wire 140, 141, consistent with the invention, may contract about 3% to 5% when heated beyond the threshold temperature. In an exemplary implementation, the threshold temperature may range from about 88 to 98 degrees Celsius. The wire 140, 141, consistent with the invention, may also relax (i.e. return to the pre-heated state) at a temperature ranging from about 62 degrees to 72 degrees Celsius. In the future, muscle wires 140, 141 that contract more or less and/or retract at lower and/or higher temperatures may be developed due to other physical properties.

The table below illustrates exemplary characteristics of wire 140, 141 that may be used in implementations consistent with the invention.

| | | |
|---|---|---|
| Wire diameter (millimeters) | 0.05 | 0.125 |
| Resistance (ohms/meter) | 510 | 70 |
| Typical power (watts/meter) | 1.28 | 4.4 |
| Contraction speed at typical power (seconds) | 1 | 1 |
| Maximum recovery force (grams) | 117 | 736 |
| Deformation force (grams) | 8 | 43 |
| Heat capacity (Joules/g) | 0.32 | 0.32 |

In a typical application, the electrical energy fed to a muscle wire 140, 141 is a pulse of amplitude 5 Volts, a current of 300 mA during 70 ms.

## Claims

1. A loudspeaker system for a portable electronic device, the loudspeaker system comprising:
- at least one flat loudspeaker element mechanically coupled to at least one memory metal part; and
- at least one power source unit configured to supply power corresponding to sound to be generated to the at least one memory metal part,
wherein, when power is supplied to the at least one memory metal part, the at least one memory metal part is configured to exert a force on the flat loudspeaker element to actuate an alternating motion of the loudspeaker element so that the loudspeaker element generates the corresponding sound.

2. The loudspeaker system of claim 1, comprising two memory metal parts, alternately controllable in substantially opposite directions, which parts are arranged to actuate the alternating motion of the loudspeaker element.

3. The loudspeaker system of claim 2, comprising a first and a second memory metal part, where the first memory metal part is arranged to actuate a motion of the loudspeaker element in a first direction and the second memory metal part is arranged to actuate a motion of the loudspeaker element in a second direction substantially opposite the first direction alternately.

4. The loudspeaker system of claim 2, comprising one memory metal part, where the memory metal part is arranged to actuate a motion of the loudspeaker element in a first direction, and a spring that is arranged to actuate a motion of the loudspeaker element in a second direction substantially opposite the first direction.

5. The loudspeaker system of claim 1, wherein the mechanical coupling between the loudspeaker element and each memory metal part is a linkage.

6. The loudspeaker system of claim 2, wherein each memory metal part is coupled directly to the loudspeaker element.

7. The loud speaker system of claim 1, wherein the actuation of the motion of the loudspeaker element is achieved by arranging each memory metal part as a taut string between two supports connected to the portable electronic device and letting a joint contacting the memory metal part between the two supports conveying the force from the memory metal part to the loudspeaker element.

8. The loudspeaker system of claim 5, wherein the linkage comprises a first member and a second member, the members being elongated and pivotally connected to each other end to end, and each memory metal part being attached at a first end to the connected ends of the linkage members and at a second end to the portable electronic device.

9. A method for actuating a flat loudspeaker element in a portable electronic device, comprising:
- receiving a signal corresponding to sound to be generated by the flat loudspeaker element,
- providing power to at least one memory metal part being mechanically connected to the flat loudspeaker element upon receipt of the signal, and
- actuating the flat loudspeaker element by means of the at least one memory metal part exerting a force on the flat loudspeaker element in response to the power being provided to the memory metal part such that an alternating motion of the loudspeaker element is actuated to generate the corresponding sound.

10. The method of claim 9, comprising:
- empowering two memory metal parts alternately, in substantially opposite directions, such that the alternating motion of the loudspeaker element is actuated.

11. The method of claim 10, comprising:
- empowering a first and a second memory metal part alternately such that the first memory metal part actuates a motion of the loudspeaker element in a first direction and the second memory metal part actuates a motion of the loudspeaker element in a second direction substantially opposite the first direction alternately.

12. A device, comprising a loudspeaker system according to any of claims 1-9.

## Patentansprüche

1. Lautsprechersystem für ein tragbares elektronisches Gerät, wobei das Lautsprechersystem umfasst:
- wenigstens ein flaches Lautsprecherelement, welches mechanisch mit wenigstens einem Formgedächtnismetallteil gekoppelt ist; und
- wenigstens einer Stromquelleneinheit, welche so konfiguriert ist, um Strom entsprechend dem Ton, welcher erzeugt werden soll, an den wenigstens einen Formgedächtnismetallteil abzugeben,
wobei, wenn Strom an den wenigstens einen Formgedächtnismetallteil zugeführt wird, der wenigstens eine Formgedächtnismetallteil konfiguriert ist, um eine Kraft auf das flache Lautsprecherelement auszuüben, um eine Hin- und Herbewegung des Lautsprecherelements auszulösen, so dass das Lautsprecherelement den entsprechenden Ton erzeugt.

2. Lautsprechersystem nach Anspruch 1, umfassend zwei Formgedächtnismetallteile, welche abwechselnd in im Wesentlichen entgegengesetzte Richtungen steuerbar sind, wobei die Teile angeordnet sind, um die Hin- und Herbewegung des Lautsprecherelements auszulösen.

3. Lautsprechersystem nach Anspruch 2, umfassend einen ersten und einen zweiten Formgedächtnismetallteil, wobei der erste Formgedächtnismetallteil angeordnet ist, um eine Bewegung des Lautsprecherelements in eine erste Richtung auszulösen, und der zweite Formgedächtnismetallteil angeordnet ist, um abwechselnd eine Bewegung des Lautsprecherelements in eine zweite Richtung, welche im Wesentlichen entgegengesetzt der ersten Richtung ist, auszulösen.

4. Lautsprechersystem nach Anspruch 2, umfassend einen Formgedächtnismetallteil, wobei der Formgedächtnismetallteil angeordnet ist, um eine Bewegung des Lautsprecherelements in eine erste Richtung auszulösen, und eine Feder, welche angeordnet ist, um eine Bewegung des Lautsprecherelements in eine zweite Richtung, im Wesentlichen entgegengesetzt der ersten Richtung, auszulösen.

5. Lautsprechersystem nach Anspruch 1, wobei die mechanische Kopplung zwischen dem Lautsprecherelement und jedem Formgedächtnismetallteil ein Gestänge ist.

6. Lautsprechersystem nach Anspruch 2, wobei jeder Formgedächtnismetallteil direkt mit dem Lautsprecherelement gekoppelt ist.

7. Lautsprechersystem nach Anspruch 1, wobei die Auslösung der Bewegung des Lautsprecherelements durch Anordnen jedes Formgedächtnismetallteils als eine gespannte Feder zwischen zwei Stützauflagern, die mit dem tragbaren elektronischen Gerät verbunden sind, und durch Zulassen des Berührens eines Gelenks mit dem Formgedächtnismetallteil zwischen den zwei Stützauflagern erzielt wird, welches eine Kraft vom Formgedächtnismetallteil auf das Lautsprecherelement überträgt.

8. Lautsprechersystem nach Anspruch 5, wobei das Gestänge ein erstes Element und ein zweites Element umfasst, wobei die Elemente länglich sind und drehbar miteinander an ihren jeweiligen Enden verbunden sind und jeder Formgedächtnismetallteil an einem ersten Ende mit den verbundenen Enden der Gestängeelemente und an einem zweiten Ende mit dem tragbaren elektronischen Gerät angebracht ist.

9. Verfahren zum Betätigen eines flachen Lautsprechers in einem tragbaren elektronischen Gerät, umfassend
- Empfangen eines Signals, welches einem Ton, welcher durch das flachen Lautsprecherelement erzeugt werden soll, entspricht,
- Bereitstellen von Strom für den wenigstens einen Formgedächtnismetallteil, welcher mechanisch mit dem flachen Lautsprecherelement verbunden ist, bei Empfang des Signals, und
- Betätigen des flachen Lautsprecherelements mittels des wenigstens einen Formgedächtnismetallteils durch Ausüben einer Kraft auf das flache Lautsprecherelement als Reaktion auf den Strom, welcher dem Formgedächtnismetallteil zugeliefert wird, so dass eine Hin- und Herbewegung des Lautsprecherelements ausgelöst wird, um den entsprechenden Ton zu erzeugen.

10. Verfahren nach Anspruch 9, umfassend:
- das abwechselnd mit Strom Versorgen von zwei Formgedächtnismetallteilen in im Wesentlichen entgegengesetzte Richtungen, so dass die Hin- und Herbewegung des Lautsprecherelements ausgelöst wird.

11. Verfahren nach Anspruch 10, umfassend:
- das abwechselnd einen ersten und einen zweiten Formgedächtnismetallteil mit Strom Versorgen, so dass der erste Formgedächtnismetallteil eine Bewegung des Lautsprecherelements in eine erste Richtung auslöst und der zweite Formgedächtnismetallteil abwechselnd eine Bewegung des Lautsprecherelements in eine zweite Richtung im Wesentlichen entgegengesetzt der ersten Richtung auslöst.

12. Gerät, umfassend ein Lautsprechersystem nach jedem beliebigen der Ansprüche 1-9.

## Revendications

1. Système de haut-parleur pour un dispositif électronique portable, le système de haut-parleur comprenant :
- au moins un élément de haut-parleur plat mécaniquement couplé à au moins une partie de métal à mémoire ; et
- au moins une unité de source d'alimentation configurée de façon à délivrer une alimentation correspondant à un son devant être généré à la partie de métal à mémoire au nombre d'au moins une ;
dans lequel, lorsqu'une alimentation est délivrée à la partie de métal à mémoire au nombre d'au moins une, la partie de métal à mémoire au nombre d'au moins une est configurée de façon à exercer une force sur l'élément de haut-parleur plat, de façon à actionner un mouvement alternatif de l'élément de haut-parleur, de telle sorte que l'élément de haut-parleur génère le son correspondant.

2. Système de haut-parleur selon la revendication 1, comprenant deux parties de métal à mémoire, pouvant être commandées en alternance dans des directions sensiblement opposées, ces parties étant agencées de façon à actionner le mouvement alternatif de l'élément de haut-parleur.

3. Système de haut-parleur selon la revendication 2, comprenant une première et une deuxième parties de métal à mémoire, la première partie de métal à mémoire étant agencée de façon à actionner un mouvement de l'élément de haut-parleur dans une première direction et la deuxième partie de métal à mémoire étant agencée de façon à actionner un mouvement de l'élément de haut-parleur dans une deuxième direction sensiblement opposée à la première direction, en alternance.

4. Système de haut-parleur selon la revendication 2, comprenant une partie de métal à mémoire, la partie de métal à mémoire étant agencée de façon à actionner un mouvement de l'élément de haut-parleur dans une première direction, et un ressort qui est agencé de façon à actionner un mouvement de l'élément de haut-parleur dans une deuxième direction sensiblement opposée à la première direction.

5. Système de haut-parleur selon la revendication 1, dans lequel le couplage mécanique entre l'élément de haut-parleur et chaque partie de métal à mémoire est une liaison.

6. Système de haut-parleur selon la revendication 2, dans lequel chaque partie de métal à mémoire est couplée directement à l'élément de haut-parleur.

7. Système de haut-parleur selon la revendication 1, dans lequel l'actionnement du mouvement de l'élément de haut-parleur est réalisé par la disposition de chaque partie de métal à mémoire sous la forme d'une corde tendue entre deux supports reliés au dispositif électronique portable et le fait de laisser à un raccord venant en contact avec la partie de métal à mémoire entre les deux supports convoyer la force de la partie de métal à mémoire à l'élément de haut-parleur.

8. Système de haut-parleur selon la revendication 5, dans lequel la liaison comprend un premier élément et un deuxième élément, les éléments étant allongés et reliés de façon à pouvoir pivoter l'un à l'autre bout à bout, et chaque partie de métal à mémoire étant attachée à une première extrémité aux extrémités reliées des éléments de liaison, et à une deuxième extrémité au dispositif électronique portable.

9. Procédé pour actionner un élément de haut-parleur plat dans un dispositif électronique portable, comprenant :
- la réception d'un signal correspondant à un son devant être généré par l'élément de haut-parleur plat,
- la délivrance d'une alimentation à au moins une partie de métal à mémoire qui est mécaniquement reliée à l'élément de haut-parleur plat lors de la réception du signal, et
- l'actionnement de l'élément de haut-parleur plat à l'aide de la partie de métal à mémoire au nombre d'au moins une qui exerce une force sur l'élément de haut-parleur plat en réponse à la délivrance de l'alimentation à la partie de métal à mémoire, de telle sorte qu'un mouvement alternatif de l'élément de haut-parleur soit actionné de façon à générer le son correspondant.

10. Procédé selon la revendication 9, comprenant :
- l'excitation de deux parties de métal à mémoire en alternance, dans des directions sensiblement opposées, de telle sorte que le mouvement alternatif de l'élément de haut-parleur soit actionné.

11. Procédé selon la revendication 10, comprenant :
- l'excitation d'une première et d'une deuxième parties de métal à mémoire en alternance, de telle sorte que la première partie de métal à mémoire actionne un mouvement de l'élément de haut-parleur dans une première direction et que la deuxième partie de métal à mémoire actionne un mouvement de l'élément de haut-parleur dans une deuxième direction sensiblement opposée à la première direction, en alternance.

12. Dispositif, comprenant un système de haut-parleur selon l'une quelconque des revendications 1 à 9.
